(19) Europäisches Patentamt
European Patent Office
Office européen des brevets

(11) EP 3 459 366 A1

(12) **EUROPEAN PATENT APPLICATION**
published in accordance with Art. 153(4) EPC

(43) Date of publication:
**27.03.2019 Bulletin 2019/13**

(21) Application number: **17799348.2**

(22) Date of filing: **15.05.2017**

(51) Int Cl.:
***A23L 29/00*** *(2016.01)* ***A23L 2/00*** *(2006.01)*
***A23L 2/70*** *(2006.01)* ***A23L 5/10*** *(2016.01)*
***A23L 27/00*** *(2016.01)* ***C08B 11/12*** *(2006.01)*
***A23G 1/00*** *(2006.01)* ***A23G 1/30*** *(2006.01)*
***A23L 7/157*** *(2016.01)*

(86) International application number:
**PCT/JP2017/018252**

(87) International publication number:
**WO 2017/199924 (23.11.2017 Gazette 2017/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.05.2016 JP 2016097634**
**08.08.2016 JP 2016155387**
**16.08.2016 JP 2016159517**
**15.11.2016 JP 2016222068**

(71) Applicant: **Nippon Paper Industries Co., Ltd.**
**Tokyo 114-0002 (JP)**

(72) Inventors:
- **KAWASAKI, Takafumi**
**Tokyo 114-0002 (JP)**
- **NAKATANI, Takeshi**
**Tokyo 114-0002 (JP)**
- **SATO, Shinji**
**Tokyo 114-0002 (JP)**
- **KIMURA, Koji**
**Tokyo 114-0002 (JP)**
- **FUJII, Takeshi**
**Tokyo 114-0002 (JP)**
- **IWAHORI, Fumiko**
**Tokyo 114-0002 (JP)**

(74) Representative: **Müller-Boré & Partner Patentanwälte PartG mbB**
**Friedenheimer Brücke 21**
**80639 München (DE)**

(54) **ADDITIVE FOR FOOD**

(57) An object of the present invention is to provide an food additive capable of improving quality and physical properties such as water retention, shape retention, and dispersion stability at the time of adding to foods such as processed foods and scarcely impairing characteristics such as original texture and flavor of food, and also to provide foods comprising the food additive. That is, the present invention provides a food additive comprising an anion-modified cellulose nanofibers and food including the food additive.

EP 3 459 366 A1

**Description**

TECHNICAL FIELD

The present invention relates to a food additive and specifically relates to a food additive capable of improving or providing foods such as processed foods with quality and physical properties such as shape retention, water retention, and dispersion stability.

BACKGROUND ART

Various food additives are used in processed foods including livestock meat foods such as hamburger steaks and "Gyoza" (Japanese jiao-zi), fishery paste products such as "Kamaboko" (boiled-fish paste), unbaked confectionery and baked confectionery such as madeleines, donuts, and Japanese confectionery, and gel-like food products such as jelly and pudding (for example, Patent documents 1 to 11). By using the food additive, the processed food is provided with properties such as water retention, shape retention, and dispersion stability.

Patent document 1 has disclosed that the yield after baking a ground meat processed food is improved, and a drip preventing effect at the time of freezing-thawing and soft as well as juicy texture without losing meat grain feeling are obtained by using "okara" (tofu refuse) processed finely so as to have an average particle diameter of 5 to 40 μm as a ground meat processed food raw material.

Patent document 2 has disclosed that a livestock meat or fish meat processed food obtained by directly adding gellan gum ground product and water to the minced livestock meat or fish meat processed food raw material and kneading the resultant mixture does not impair texture such as flavor and juicy feeling, because of suppressing the decrease in volume and shape collapse due to processing such as freezing processing and retort sterilization processing.

Patent document 3 has disclosed a method for producing processed foods such as "niku-man" (steamed meat bun) by enclosing ingredients including the foodstuffs such as meats, vegetables, and seasonings and sol-gel forming agent such as gelatin and collagen powder in an outer wrapping material and heating the resultant product. This method allows the ingredients to have shape retention capable of handling the ingredients and to recover flowability due to sol formation above room temperature.

Patent document 4 has disclosed a method providing quality improvement effects such as improvement of food texture including crispy touch as well as sensation in mouth and reduction in water content change by adding a low molecular weight collagen peptide having an average molecular weight of 1,000 to 5,000 in an amount of 0.5 to 2.0% by weight relative to the total amount of the material of a madeleine cake using wheat flour or rice flour.

Patent document 5 has disclosed fried foods using an acidic oil-in-water type emulsion containing fats and oils, enzyme-treated yolk, methyl cellulose, and water.

Patent document 6 has disclosed that a "tare sauce" ("tare," namely, Japanese sauce) for food comprising a starch adhesive made of sodium carboxymethyl cellulose having a 2% aqueous solution viscosity of 100 to 20,000 mPa·s and a degree of etherification of 0.3 to 2.2 has no time-course change and is superior in gloss, transparency, thixotropy, and viscosity.

Patent document 7 has disclosed that a seasoning composition obtained by adding 0.5% by weight or more of powdery cellulose and a thickening agent such as natural gums, natural starches, and modified starches to a liquid raw material such as water, soy sauce, and isomerized sugar and stirring the resultant mixture to be thickened is useful as a tare sauce for food coating less dripping thereof when the tare sauce is applied to a food material or the like.

Patent document 8 has disclosed that; a thickening polysaccharide, a gelling agent, and starch are used as an modifier of viscosity of a tare sauce for steaming meat; and when the tare sauce including 10% by weight or more of fats and oils and the modifier are added to a meat and baked with charcoal, the sufficient amount of the tare sauce can be attached to the meat due to an increase in the viscosity of the tare sauce.

Patent document 9 has disclosed a food dispersion stabilizer being carboxymethyl cellulose or a salt thereof having a substitution degree of carboxymethyl per glucose unit of 0.01 to 0.40 and a degree of crystallization of cellulose I-type of 40% or more and less than 88%.

Patent document 10 has disclosed a food comprising cellulose nanofibers having an average fiber diameter of less than 100 nm and a ratio of an average fiber length to the average fiber diameter of 2,000 or more as a method for enhancing the strength of foods having viscoelasticity (for example, gummies and noodles).

Patent document 11 has disclosed a method for producing a cereal flour-containing dough having enhanced strength, and the method includes a step of blending bionanofibers into the cereal flour-containing dough.

PRIOR ART DOCUMENTS

Patent Documents

Patent document 1: JP-A-2002-204675
Patent document 2: JP-A-2007-222041
Patent document 3: JP-A-2001-128650
Patent document 4: JP-B-5203336
Patent document 5: JP-A-2001-037425
Patent document 6: JP-A-H07-194335
Patent document 7: JP-A-H06-141815
Patent document 8: JP-B-5666736
Patent document 9: JP-A-2015-149929
Patent document 10: JP-A-2013-236585
Patent document 11: JP-A-2016-027795

SUMMARY OF INVENTION

PROBLEM TO BE SOLVED BY THE INVENTION

However, according to the method of Patent document 2, a large amount of the gellan gum ground product and water are often added in order to sufficiently provide shape retention and water retention to the fish meat processed food. As a result, there is a risk to cause problems such as stickiness and poor texture at the time of eating the fish meat processed food. When the livestock meat processed food seasoning with sauce such as simmered hamburger steaks and meatballs is retort foods or frozen foods, there is also a problem that carnivorous animal smell peculiar to the meat is strengthened due to the length of heating time during cooking.
According to the method of Patent document 1, it enables fibrous substances such as okara to effectively improve the shape retention of ground meat processed food. However, there are problems such as occurring dry feeling and remaining fiber feeling at the time of eating the ground meat processed food, if the fiber size is large.
According to the method of Patent document 3, there is a problem of easily releasing water from the ingredients to easily collapse the shape since molecular motion of water contained in the ingredients is activated during the heating process of the ingredients and the outer wrapping material.
According to the methods of Patent documents 4 and 5, it may not be possible to sufficiently improve the quality of the madeleine cakes and fried foods. According to the methods of Patent documents 6 to 9, it may not be possible to sufficiently achieve the coating properties of the tare sauce and dispersion stability of the beverages.
According to the methods of Patent documents 10 and 11, target foods are limited to the specific processed foods such as processed foods using cereal flours as raw materials (for example, noodles). As to the physical properties of the cellulose nanofiber capable of improving the quality of various processed foods, it has not been sufficiently studied.
For these reasons, an object of the present invention is to provide an food additive capable of improving quality and physical properties such as water retention, shape retention, and dispersion stability at the time of adding the additive to foods such as processed foods and scarcely impairing characteristics such as original texture and flavor of food, and also to provide foods comprising the food additive.

MEANS FOR SOLVING PROBLEM

Above problems are solved by the means including the following [1] to [8].

[1] A food additive, comprising an anion-modified cellulose nanofiber.
[2] The food additive according to [1], wherein a substitution degree of carboxymethyl per glucose unit of the anion-modified cellulose nanofiber is within a range of 0.01 to 0.50.
[3] The food additive according to [1] or [2], wherein a water content of the anion-modified cellulose nanofiber is 12% by mass or less and a CNF dispersion index of the anion-modified cellulose nanofiber determined by the following Steps of (1) to (5) is 8,000 or less:

Step (1): a step of adding the anion-modified cellulose nanofiber to water at 25°C, stirring the resultant mixture for 5 minutes to obtain a 1.0% by mass of anion-modified cellulose nanofiber dispersion liquid, adding a coloring

material including 5 to 20% by mass of a colored pigment having an average particle diameter of 0.03 μm or more and 1 μm or less to 1 g of the dispersion liquid, and stirring the resultant mixture for 1 minute to obtain an anion-modified cellulose nanofiber dispersion liquid including the coloring material;
Step (2): a step of sandwiching the anion-modified cellulose nanofiber dispersion liquid including the coloring material obtained at Step (1) between two glass plates to form a film having a thickness of 0.15 mm between the two glass plates;
Step (3): a step of observing the film obtained at Step (2) with a microscope (magnification: 100 times);
Step (4): a step of measuring major axes of aggregates existing in a range of 3 mm × 2.3 mm in the film observed at Step (3) to classify the aggregates into Extra-large: aggregates having a major axis of 150 μm or more, Large: aggregates having a major axis of 100 μm or more and less than 150 μm, Medium: aggregates having a major axis of 50 μm or more and less than 100 μm, and Small: aggregates having a major axis of 20 μm or more and less than 50 μm; and
Step (5): a step of calculating the CNF dispersion index by substituting number of aggregates of each group classified at Step (4) into the following equation:

CNF dispersion index = (Number of Extra-large aggregates × 512 + Number of Large aggregates × 64 + Number of Medium aggregates × 8 + Number of Small aggregates × 1) ÷ 2.

[4] The food additive according to [1] or [2], wherein a water content of the anion-modified cellulose nanofiber is more than 12% by mass and a CNF dispersion index of the anion-modified cellulose nanofiber determined by the following Steps of (1') to (5) is 8,000 or less:

Step (1'): a step of controlling the water content of the anion-modified cellulose nanofiber to obtain a 1.0% by mass of anion-modified cellulose nanofiber dispersion liquid, adding a coloring material including 5 to 20% by mass of a color pigment having an average particle diameter of 0.03 μm or more and 1 μm or less to 1 g of the dispersion liquid, and stirring the resultant mixture for 1 minute to obtain an anion-modified cellulose nanofiber dispersion liquid including the coloring material;
Step (2): a step of sandwiching the anion-modified cellulose nanofiber dispersion liquid including the coloring material obtained at Step (1') between two glass plates to form a film having a thickness of 0.15 mm between the two glass plates;
Step (3): a step of observing the film obtained at Step (2) with a microscope (magnification: 100 times);
Step (4): a step of measuring major axes of aggregates existing in a range of 3 mm × 2.3 mm in the film observed at Step (3) to classify the aggregates into Extra-large: aggregates having a major axis of 150 μm or more, Large: aggregates having a major axis of 100 μm or more and less than 150 μm, Medium: aggregates having a major axis of 50 μm or more and less than 100 μm, and Small: aggregates having a major axis of 20 μm or more and less than 50 μm; and
Step (5): a step of calculating the CNF dispersion index by counting a number of aggregates of each group classified at Step (4), and substituting the number into the following equation:

CNF dispersion index = (Number of Extra-large aggregates × 512 + Number of Large aggregates × 64 + Number of Medium aggregates × 8 + Number of Small aggregates × 1) ÷ 2.

[5] A tare sauce food, comprising the food additive according to any one of [1] to [4].
[6] A fried food, comprising the food additive according to any one of [1] to [4].
[7] A dispersion type beverage, comprising the food additive according to any one of [1] to [4].
[8] A cereal flour processed food, comprising the food additive according to any one of [1] to [4].

EFFECT OF THE INVENTION

According to the present invention, it is possible to provide a food additive capable of improving quality and physical properties such as water retention, shape retention, and dispersion stability at the time of adding it to foods such as processed foods and scarcely impairing characteristics such as original texture and flavor of food, and also to provide foods comprising the food additive.

EMBODIMENTS FOR CARRYING OUT THE INVENTION

Hereinafter, embodiments for carrying out the present invention will be described. However, the present invention is not limited to the following embodiments and examples. The following embodiments and examples arbitrary modified without departing from the scope of the claims of the present invention and the equivalent scope thereof can be carried out.

[1. Food additive]

The food additive of the present invention includes anion-modified cellulose nanofibers (hereinafter, referred to as "anion-modified CNF" in some cases). From this, it is possible to improve or provide quality and physical properties such as water retention, shape retention, and dispersion stability without impairing characteristics such as original texture and flavor of food such as the processed food.

Although there is no clear reason that excellent effects are exhibited by adding the anion-modified CNF to foods, it is described as follows. Firstly, it is presumed that the food to which the anion-modified CNF is added is superior in water retention and shape retention because the anion-modified CNF having a carboxymethyl group has high water retention and is a fiber (to have crystallinity). Secondly, the anion-modified CNF does not have a spinnability in a state of being dispersed in water to be highly viscous, and cellulose is odorless and tasteless. Therefore, it is presumed that the dispersion stability of the food can be improved at the time of adding the anion-modified CNF, and that the characteristics such as original texture and flavor of food are not impaired.

(Anion-modified cellulose nanofibers (anion-modified CNF))

In this specification, the anion-modified CNF is a nano-scale fibrous material having a structure in which an anionic functional group is introduced into cellulose. The anionic functional group is usually introduced into at least one hydroxyl group existing in the glucose unit constituting cellulose. The anionic functional group means a functional group taking the form of an anion in water and examples of the anionic functional group include a carboxyl group, a carboxymethyl group, a sulfone group, a phosphoric acid ester group, and a nitro group. Of these anionic functional groups, a carboxyl group, a carboxymethyl group, and a phosphoric acid ester group are preferable, a carboxyl group and a carboxymethyl group are more preferable, and a carboxymethyl group is further preferable. The anion-modified CNF is usually fine fibers having a fiber width of 4 to 500 nm and an aspect ratio of 20 or more. The average fiber length and the average fiber diameter can be calculated as the average value of the fiber lengths and the fiber diameters of 200 fibers randomly selected from the observation image of a field emission type scanning electron microscope. The aspect ratio can be calculated as the value of the ratio of the average fiber length to the average fiber diameter.

<Method for producing anion-modified CNF>

Examples of the method for producing the anion-modified CNF include a method including anion modification treatment of introducing the anion group into a cellulose raw material and fibrillation treatment carried out as needed. In this specification, cellulose subjected to the anion modification treatment is referred to as anion-modified cellulose.

(Cellulose raw material)

Examples of the cellulose raw material include plant materials (for example, wood, bamboo, hemp, jute, kenaf, residue from agricultural land, cloth, pulp (softwood unbleached kraft pulp (NUKP), softwood bleached kraft pulp (NBKP), hardwood unbleached kraft pulp (LUKP), hardwood bleached kraft pulp (LBKP), softwood unbleached sulfite pulp (NUSP), softwood bleached sulfite pulp (NBSP), thermomechanical pulp (TMP), regenerated pulp, used paper, and the like), animal materials (for example, ascidian), algae, microorganisms (for example, acetic acid bacteria (Acetobacter)), and microorganism products. Any of these materials can be used. Cellulose fibers derived from plants or microorganisms are preferable and cellulose fibers derived from plants are more preferable. The cellulose raw material may be powdery cellulose made by pulverizing any of the above cellulose raw materials with an apparatus such as high pressure homogenizer or mill, microcrystalline cellulose powder obtained by refining the powdery cellulose by chemical treatment such as acid hydrolysis, and finely pulverized cellulose powder obtained by finely pulverizing the cellulose raw material using a dispersing device such as a high-speed rotary dispersing device, a colloid mill dispersing device, a high pressure dispersing device, a roll mill dispersing device, or an ultrasonic dispersing device; a wet type high pressure or ultrahigh pressure homogenizer. From the viewpoint of mass production and cost, the powdery cellulose, the microcrystalline cellulose powder, or the chemical pulp such as the sulfite pulp and the kraft pulp is preferable and a bleached pulp obtained by applying bleach treatment to the chemical pulp to remove lignin is preferable. As the bleached pulp, for example, bleached kraft pulp or bleached sulfite pulp having brightness (ISO 2470) of 80% or more can be used.

A bleaching treatment method can be carried in combination of chlorine treatment (C), chlorine dioxide bleaching (D), alkaline extraction (E), hypochlorite bleaching (H), hydrogen peroxide bleaching (P), alkaline hydrogen peroxide treatment stage (Ep), alkaline hydrogen peroxide/oxygen treatment stage (Eop), ozone treatment (Z), and chelating treatment (Q). For example, the bleaching treatment method can be carried out in the sequence of C/DE-H-D, Z-E-D-P, Z/D-Ep-D, Z/D-Ep-D-P, D-Ep-D, D-Ep-D-P, D-Ep-P-D, Z-Eop-D-D, Z/D-Eop-D, and Z/D-Eop-D-E-D. The "/" in the sequences means that the processes before and after "/" are continuously carried out without washing.

Examples of the treatment for introducing the anionic functional group into the cellulose raw material to obtain the anionic cellulose include treatment of introducing a carboxymethyl group (carboxymethylation), treatment of introducing a carboxyl group (carboxylation), and treatment of introducing a phosphate ester (phosphate esterification), and the carboxymethylation is preferable.

(Carboxymethylation)

The carboxymethylation is the treatment of subjecting the cellulose raw material to mercerization treatment with a mercerizing agent and thereafter reacting the resultant with a carboxymethylating agent.

The mercerization treatment can be usually carried out by mixing the cellulose-based raw material, a solvent, and the mercerizing agent.

The solvent is preferably water and/or a lower alcohol, and more preferably water. The amount of the solvent to be used is preferably 3 to 20 times in terms of mass of the cellulose raw material. The carboxymethylation is usually carried out while dissolving the cellulose raw material in the solvent. The amount of the solvent to be used is preferably 3 to 20 times in terms of mass of the cellulose raw material. Examples of the solvent include water and/or a lower alcohol. Examples of the lower alcohol include water, methanol, ethanol, n-propyl alcohol, isopropyl alcohol, n-butyl alcohol, isobutyl alcohol, and tertiary butyl alcohol. The lower alcohols may be used singly or in combination of two or more of these lower alcohols. The mixing ratio of the lower alcohol in the case where the solvent contains the lower alcohol is usually 60 to 95% by mass.

The mercerizing agent is preferably an alkali metal hydroxide, and more preferably sodium hydroxide or potassium hydroxide. The amount of the mercerizing agent to be used is preferably 0.5 to 20 times per anhydrous glucose residue of the cellulose-based raw material in terms of molar basis. The reaction temperature of the mercerization treatment is usually 0 to 70°C, and preferably 10 to 60°C. The reaction time of the mercerization treatment is usually 15 minutes to 8 hours, and preferably 30 minutes to 7 hours. The mercerization treatment may be carried out under stirring.

After the mercerization treatment, a carboxymethylated cellulose is obtained by adding the carboxymethylating agent to the reaction medium to introduce carboxymethyl group into the cellulose. The carboxymethylating agent is preferably a compound represented by Formula (3), and more preferably monochloroacetic acid and sodium monochloroacetate.

[Chemical Formula 1]

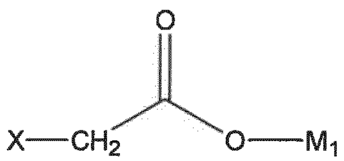

(3)

(In Formula (3), X represents a halogen atom; and $M_1$ represents a hydrogen atom or an alkali metal.)

Examples of the halogen atom represented by X in Formula (3) include a chlorine atom, a bromine atom, and an iodine atom. Of these halogen atoms, the chlorine atom is preferable.

Examples of the alkali metal represented by $M_1$ in Formula (3) include sodium and potassium. Of these alkali

metals, sodium is preferable.

The amount of the carboxymethylating agent to be added is preferably from 0.05 to 10.0 times by mole per glucose residues of the cellulose raw material in terms of molar basis. The reaction temperature of the carboxymethylation reaction is usually 30 to 90°C, and preferably 40 to 80°C. The reaction time is usually 30 minutes to 10 hours, and preferably 1 hour to 4 hours. The carboxymethylated cellulose is thus produced. The partial structure of the carboxymethylated cellulose is illustrated in the following Formula (1).

[Chemical Formula 2]

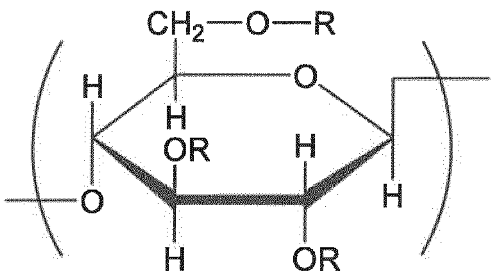

(1)

(In Formula (1), R each independently represents a hydrogen atom, an alkali metal, or a group represented by Formula (2).)

[Chemical Formula 3]

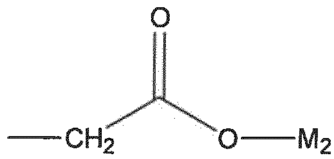

(2)

(In Formula (2), $M_2$ represents a hydrogen atom or an alkali metal.)

Examples of the alkali metal represented by R in Formula (1) and $M_2$ in Formula (2) include sodium and potassium. Of these alkali metals, sodium is preferable.

The reaction product after carboxymethylation may be carboxymethylated cellulose (salt form) as it is. The reaction product may also be carboxymethylated cellulose (acid form) obtained by further subjecting the product to desalting treatment. The desalting may be carried out at any time before and after the fibrillation described below. Desalting means that the salt (for example, sodium salt) contained in the reaction product (salt form) is substituted with proton to form the acid form. Example of a method for desalting after etherification (for example, carboxylation) is a method in which the modified cellulose or the modified cellulose nanofibers are brought into contact with a cation exchange resin. As the cation exchange resin, either a strongly acidic ion exchange resin or a weakly acidic ion exchange resin can be used as long as the counter ion is $H^+$. The ratio of the modified cellulose and the cation exchange resin at the time of bringing the modified cellulose into contact with the cation exchange resin is not particularly limited. Those skilled in the art can appropriately set the ratio from the viewpoint of effective proton substitution. For example, the ratio can be adjusted so that the pH of the dispersion liquid after adding the cation exchange resin to the modified cellulose nanofiber dispersion liquid is preferably 2 to 6, and more preferably 2 to 5. The cation exchange resin after contacting may be recovered by a conventional method such as suction filtration.

It is preferable that at least a part of the fibrous shape of the anion-modified cellulose such as the carboxymethylated cellulose is retained even when the anion-modified cellulose is dispersed in water. In this specification, such anion-modified cellulose is referred to as an anion-modified cellulose fiber (for example, carboxymethylated cellulose).

The anion-modified cellulose fiber is distinguished from cellulose powder such as carboxymethyl cellulose being one of the water-soluble polymers that is dissolved in water to provide viscosity. When the water dispersion liquid of the anion-modified cellulose fiber is observed with an electron microscope, fibrous substances can be observed. In contrast, even when the water dispersion liquid of carboxymethyl cellulose being one of the water-soluble polymers is observed, fibrous substances cannot be observed. In addition, the peak of the cellulose I-type crystal can be observed when the anion-modified cellulose fiber is measured by X-ray diffraction. In contrast, the cellulose I-type crystal cannot be observed, when the carboxymethyl cellulose powder being a water-soluble polymer is observed in the same manner.

The carboxymethylated cellulose preferably has a substitution degree of carboxymethyl per glucose unit within a range of 0.01 to 0.50, and more preferably within a range of 0.10 to 0.30. The substitution degree of carboxymethyl means an average number of carboxymethyl groups per glucose unit. When the substitution degree of carboxymethyl is excessively high, sufficient shape retention may not be exhibited in foods because the crystallinity (degree of crystallization) is decreased, and the texture may deteriorate (for example, sticky feeling may occur) because solubility in water becomes high. On the other hand, when the substitution degree of carboxymethyl is low (the number of hydrophilic groups is small), the original characteristics of the food such as moist feeling may deteriorate because the water retention of foods is decreased. The substitution degree of carboxymethyl of carboxymethylated cellulose and the substitution degree of carboxymethyl of the carboxymethylated cellulose nanofiber derived from such carboxymethylated cellulose usually have the same value.

The substitution degree of carboxymethyl per glucose unit can be calculated by the following method. About 2.0 g of carboxymethylated cellulose (absolutely dried) is precisely weighed and placed in a 300 mL stoppered Erlenmeyer flask. Into the flask, 100 mL of a liquid obtained by adding 100 mL of special grade concentrated nitric acid to 1,000 mL of methanol nitrate is added, and then the resultant mixture is shaken for 3 hours to convert a salt type carboxymethylated cellulose (hereinafter, may also referred to as "salt type CM-modified cellulose") into an acid type carboxymethylated cellulose (hereinafter, may also referred to as "H-type CM-modified cellulose"). 1.5 to 2.0 g of the H-type CM-modified cellulose (absolutely dried) is precisely weighed and placed in a 300 mL stoppered Erlenmeyer flask. The H-type CM-modified cellulose is wet with 15 mL of 80% methanol, and then 100 mL of 0.1 N NaOH is added thereto, followed by shaking the resultant mixture at room temperature for 3 hours. Excessive NaOH is back-titrated with 0.1 N $H_2SO_4$ using phenolphthalein as an indicator, and the substitution degree of carboxymethyl (DS) can be calculated by the following formula:

$$A = [(100 \times F - (0.1\ N\ H_2SO_4\ (mL) \times F') \times 0.1]/(\text{Absolutely dried mass of H-type CM-modified cellulose (g)})$$

$$DS = 0.162 \times A/(1 - 0.058 \times A)$$

A: Amount of 1 N NaOH (mL) required for neutralization of 1 g of H-type CM-modified cellulose
F': Factor of 0.1 N $H_2SO_4$
F: Factor of 0.1 N NaOH

The degree of crystallization of cellulose crystal I-type of carboxymethylated cellulose is preferably 60% or more, and more preferably 70% or more. The ratio of the degree of crystallization of the degree of crystallization of the cellulose crystal II-type to the degree of crystallization of cellulose I-type of the carboxymethylated cellulose is preferably 10 to 50%, and more preferably 20 to 50%. In other words, it is preferable that a degree of crystallization of cellulose crystal I-type of carboxymethylated cellulose is 60% or more, and a ratio of the degree of crystallization of the cellulose crystal II-type to the degree of crystallization of the cellulose crystal I-type is 10 to 50%, and it is more preferable that a degree of crystallization of the cellulose crystal I-type is 70% or more, and a ratio of the degree of crystallization of the cellulose crystal II-type to the degree of crystallization of the cellulose crystal I-type of 20 to 50%. The degree of crystallization of carboxymethylated cellulose and the degree of crystallization of the carboxymethylated cellulose nanofiber derived from such carboxymethylated cellulose usually have the same value.

The degree of crystallization of the cellulose I-type crystal and the ratio of the II-type crystal to the I-type crystal can be calculated from the peak of the diffraction angle 2θ of the graph obtained by measurement with a wide angle X ray diffraction method. The procedure is as follows. Firstly, cellulose to be measured is frozen with liquid nitrogen, and the frozen cellulose is compressed to prepare a tablet pellet. Thereafter, X-ray diffraction of this tablet pellet is measured using a commercially available X-ray diffraction measurement apparatus (for example, LabX XRD-6000, manufactured

by Shimadzu Corporation). The peaks in the graph obtained as a result of the measurement are separated by graph analysis software PeakFit (manufactured by HULINKS Inc.), and the I-type crystal, II-type crystal, and an amorphous component are distinguished on the basis of the following diffraction angles. The ratio of the degree of crystallization of the cellulose crystal II-type to the degree of crystallization of the cellulose crystal I-type is calculated from the area ratio of the peaks.

I-Type crystal: $2\theta$ = 14.7°, 16.5°, and 22.5°
II-Type crystal: $2\theta$ = 12.3°, 20.2°, and 21.9°
Amorphous component: $2\theta$ = 18°

The degree of crystallization of the cellulose I-type crystal is calculated by substituting the values of the diffraction intensity ($I_a$) at a diffraction angle of 18° and the diffraction intensity ($I_c$) at a diffraction angle of 22.5° into the following formula based on Segal method.

$$\text{Degree of crystallization of I-type crystal} = (I_c - I_a)/I_c \times 100$$

(Fibrillation)

In the production of the anion-modified CNF from the cellulose raw material, fibrillation (nano fibrillation) treatment is usually carried out. The timing of the fibrillation treatment is not particularly limited and may be either or both of before and after the modification treatment. The treatment is preferably carried out at least after the modification treatment. This allows the fibrillation treatment to be carried out with less energy than the energy required for the fibrillation treatment before the modification treatment. The number of times of fibrillation treatment is not particularly limited and may be once or plural times. The timing of the desalting treatment may be either or both of before and after the desalting treatment, if the above desalting treatment is carried out.

Examples of the fibrillation treatment include treatment using a fibrillation apparatus such as a high-speed shear mixer and a high-pressure homogenizer after the anion-modified cellulose is sufficiently washed with water. The fibrillation apparatus is not particularly limited, and the apparatus such as a high-speed rotation type, colloid mill type, high pressure type, roll mill type, or ultrasonic type apparatus may be used. These apparatuses may be used singly or in combination of two or more of these apparatuses. During the fibrillation, a strong shearing force is preferably applied to the anion-modified cellulose (usually to an aqueous dispersion of the anion-modified cellulose). This enables efficient fibrillation. When a high-pressure homogenizer is used, the applied pressure is preferably 50 MPa or more, more preferably 100 MPa or more, and further preferably 140 MPa or more. Treatment with a wet-type high-pressure or ultra-high pressure homogenizer having the applied pressure in the above range allows formation of the short fibers of the carboxymethylated cellulose to efficiently proceed and the carboxymethylated cellulose nanofiber salt to be efficiently obtained. When a high-speed shear mixer is used, the shear rate is preferably 1,000 $sec^{-1}$ or more. When the shear rate is 1,000 $sec^{-1}$ or more, the anion-modified CNF having less aggregated structure and being homogeneous can be obtained. The anion-modified cellulose is subjected to a fibrillation treatment as a dispersion liquid (usually a water dispersion liquid). When a concentration of the anion-modified cellulose in the dispersion liquid is high, the viscosity may be excessively increased during fibrillation treatment and thus the fibrillation cannot be homogeneously carried out, or the apparatus may stop. Therefore, the concentration of the anion-modified cellulose such as carboxymethylated cellulose is required to be appropriately set depending on the process conditions of the carboxymethylated cellulose. For example, the concentration is 0.3 to 50% (w/v), preferably 0.5 to 10% (w/v), and more preferably 1.0 to 5% (w/v).

The fibrillation treatment is usually carried out in the dispersion liquid of the cellulose-based raw material or the dispersion liquid of the anion-modified cellulose. The dispersion liquid is usually an aqueous dispersion liquid such as a water dispersion liquid. Pretreatment may be carried out prior to the preparation of the dispersion, if necessary. Examples of the pretreatment include mixing, stirring, emulsification, and dispersion. The pretreatment may be carried out using a known apparatus such as a high speed shear mixer.

When the fibrillation treatment is carried to the dispersion, the lower limit of the solid content concentration of the cellulose-based raw material or anion-modified cellulose in the dispersion liquid is usually 0.1% by mass, preferably 0.2% by mass, and more preferably 0.3% by mass. This enables the amount of the liquid relative to the amount of the cellulose-based raw material or the anion-modified cellulose to be treated to be appropriate, which is efficient. The upper limit is usually 10% by mass, and preferably 6% by mass. This enables the fluidity to be retained.

(Other treatment)

Treatment other than the fibrillation treatment may be carried out during production of the cellulose fibers from the cellulose raw material. Examples of other treatment include filtration treatment (usually after the fibrillation treatment) and short fiber formation treatment. Examples of the short fiber formation treatment include ultraviolet irradiation treatment, oxidative decomposition treatment, hydrolysis treatment, and combinations of two or more of them.

(Form)

The embodiment of the anion-modified CNF is not particularly limited and may be any of a liquid state, a gel state, a solid state (for example, a pellet state, a particle state, and a powder state). The powder state is preferable. The anion-modified CNF may include water, and the water content of the anion-modified CNF is not particularly limited. Examples of the embodiment of the anion-modified cellulose nanofiber include a dispersion liquid, a dry solid product, or a wet solid product being an intermediate state thereof. In this specification, for convenience, the anion-modified cellulose nanofiber having a water content of 12% by mass or less may be referred to as the dry solid product. Here, the water content refers to the mass ratio (% by mass) of water relative to the total mass of the anion-modified cellulose nanofiber including water.

A method for preparing the dry solid product of the anion-modified cellulose nanofiber is not particularly limited. Examples of the method include dewatering/drying treatment. In other words, example of the method for preparing the dry solid product of the anion-modified cellulose nanofiber is a method for adjusting water of the dispersion liquid of the anion-modified cellulose nanofiber by a treatment such as dewatering/drying treatment. The dispersion liquid of the anion-modified cellulose may further include a water-soluble polymer. This enables the redispersibility to be improved. Examples of the water-soluble polymer include cellulose derivatives (for example, carboxymethyl cellulose, methyl cellulose, hydroxypropyl cellulose, or ethyl cellulose or salts thereof), xanthan gum, xyloglucan, dextrin, dextran, carrageenan, locus.t bean gum, alginic acid, alginate, pullulan, starch, potato starch powder, arrowroot powder, cationic starch, phosphorylated starch, corn starch, gum arabic, locust bean gum, gellan gum, gellan gum, polydextrose, pectin, chitin, water soluble chitin, chitosan, casein, albumin, soy protein lysate, peptone, polyvinyl alcohol, polyacrylamide, sodium polyacrylate, polyvinyl pyrrolidone, polyvinyl acetate, polyamino acid, polylactic acid, polymalic acid, polyglycerin, latex, a rosin-based sizing agent, a petroleum resin-based sizing agent, a urea resin, a melamine resin, an epoxy resin, a polyamide resin, a polyamide-polyamine resin, polyethyleneimine, polyamine, plant gum, polyethylene oxide, a hydrophilic crosslinked polymer, polyacrylic acid salt, a starch polyacrylic acid copolymer, tamarind gum, gellan gum, pectin, guar gum, and colloidal silica and a mixture of one or more polymers. Of these water-soluble polymers, carboxymethyl cellulose or a salt thereof is preferably used from the viewpoint of compatibility.

The pH of the dispersion liquid of the anion-modified cellulose nanofiber is preferably adjusted from 9 to 11 during above dewatering treatment. This enables the redispersibility to be improved. The content amount of the water-soluble polymer in the dispersion liquid is preferably 5 to 50% by mass relative to the solid content of the absolutely dried anion-modified cellulose nanofiber. When the amount of the water-soluble polymer to be blended is less than 5% by mass, it may fail to achieve sufficient redispersibility. On the other hand, when the amount of the water-soluble polymer to be blended is more than 50% by mass, there is a risk of causing problems such as deterioration in viscosity properties and reduction in dispersion stability, which are characteristics of the anion-modified cellulose nanofiber.

The dewatering/drying treatment may be any conventionally known treatment and examples of the dewatering/drying treatment include spray drying, squeezing, air drying, hot air drying, and vacuum drying. Examples of the apparatus used for the dewatering/drying treatment include continuous dryers such as a tunnel dryer, a band dryer, a vertical dryer, a vertical turbo dryer, a multistage disk dryer, an air drying dryer, a rotary dryer, an air stream dryer, a spray dryer drying apparatus, a spray dryer, a cylindrical dryer, a drum dryer, a screw conveyor dryer, a rotary dryer with a heating tube, and a vibration transportation dryer; and batch type dryers such as a box type dryer, an aeration dryer, a vacuum box type dryer, and a stirring dryer. These apparatuses may be used singly or in combination of two or more of these apparatuses. Of these dryers, the drum dryer is preferable. This enables energy efficiency to increase from the viewpoint that heat energy can be directly and uniformly supplied to the object to be dried, and that the dried product can be immediately recovered without applying heat more than necessary.

(CNF dispersion index)

The CNF dispersion index of the anion-modified CNF is preferably 8,000 or less, more preferably 2,000 or less, further preferably 1,000 or less, further preferably 500 or less, and further preferably 100 or less. The lower limit value is not particularly limited and is usually 0.

The CNF dispersion index can quantitatively evaluate the CNF dispersibility. The small value of the CNF dispersion index indicates that the cellulose nanofiber is difficult to form or remain large aggregates in the dispersion liquid.

The CNF dispersion index is an index for CNF modified from the NEP index (disclosed in, for example, JP-A-H08-134329) being an index of fiber dispersibility. Hereinafter, a method for calculating the CNF dispersion index will be described. Thereby, the anion-modified CNF having good dispersibility in the dispersion medium can be selected. CNF evaluated as having good dispersibility in a dispersion medium from the CNF dispersion index has not only good solubility of the redispersion liquid, but also less undispersed substances. Therefore, the smooth feeling and sensation in mouth at the time of adding the CNF to foods are improved. Consequently, such CNF is preferably used in applications such as foods, cosmetics, and chemical products. When such CNF is used for a liquid product such as a cosmetic product, it is possible to improve physical properties such as transparency, light transmittance, and viscosity reproducibility of the liquid product. When such CNF is used for chemical products such as an optical film, it is possible to improve the physical properties such as transparency and light transmittance.

The CNF dispersion index can be determined, for example, by preparing a dispersion liquid (redispersion liquid) having the predetermined concentration of the target cellulose nanofiber and measuring aggregates of cellulose nanofiber in the redispersion liquid. Specifically, the CNF dispersion index can be determined by the following steps.

When a water content of the anion-modified CNF is 12% by mass or less, the CNF dispersion index of the anion-modified CNF can be determined by the following steps (1) to (5) :

Step (1): a step of adding the anion-modified cellulose nanofibers to water at 25°C, stirring the resultant mixture for 5 minutes to obtain a 1.0% by mass of anion-modified cellulose nanofiber dispersion liquid, adding a coloring material including 5 to 20% by mass of a colored pigment having an average particle diameter of 0.03 μm or more and 1 μm or less to 1 g of the dispersion liquid, and stirring the resultant mixture for 1 minute to obtain an anion-modified cellulose nanofiber dispersion liquid including the coloring material;
Step (2): a step of sandwiching the anion-modified cellulose nanofiber dispersion liquid including the coloring material obtained at Step (1) between two glass plates to form a film having a thickness of 0.15 mm between the two glass plates;
Step (3): a step of observing the film obtained at Step (2) with a microscope (magnification: 100 times);
Step (4): a step of measuring the major axes of aggregates existing in an observation range of 3 mm $\times$ 2.3 mm in an observation image observed at Step (3) to classify the aggregates into Extra-large: aggregates having a major axis of 150 μm or more, Large: aggregates having a major axis of 100 μm or more and less than 150 μm, Medium: aggregates having a major axis of 50 μm or more and less than 100 μm, and Small: aggregates having a major axis of 20 μm or more and less than 50 μm; and
Step (5): a step of calculating the CNF dispersion index by substituting the number of aggregates of each group classified at Step (4) into the following equation:

CNF dispersion index = (Number of Extra-large aggregates × 512 + Number of Large aggregates × 64 + Number of Medium aggregates × 8 + Number of Small aggregates × 1) ÷ 2.

When a water content of the anion-modified CNF is more than 12% by mass, the CNF dispersion index is determined by Steps (2) to (5) except that Step (1') is carried out instead of Step (1):
Step (1'): a step of controlling the water content of the anion-modified cellulose nanofibers to obtain a 1.0% by mass of anion-modified cellulose nanofiber dispersion liquid, adding a coloring material including 5 to 20% by mass of a colored pigment having an average particle diameter of 0.03 μm or more and 1 μm or less to 1 g of the dispersion liquid, and stirring the resultant mixture for 1 minute to obtain an anion-modified cellulose nanofiber dispersion liquid including the coloring material.

The 1.0% by mass anion-modified cellulose nanofiber dispersion liquid at Steps (1) and (1') are the solid content concentration of the anion-modified cellulose nanofibers in the dispersion liquid.

(Coloring material)

The coloring material used for measuring the CNF dispersion index includes the colored pigment having an average particle diameter of 0.03 μm or more and 1 μm or less and is usually a dispersion liquid in which the colored pigment is dispersed in a solvent. The color of the coloring material is not particularly limited and examples thereof include white, black, blue, red, yellow, and green. The amount of the coloring material to be added is, for example, 2 drops (usually 0.03 ml to 0.05 ml) relative to 1 g of the anion-modified CNF dispersion liquid.

(Colored pigment)

The colored pigment is a pigment having a color such as white, black, blue, red, yellow, or green. The shape of the colored pigment is not particularly limited and examples of the shape include a plate shape, a spherical shape, and a scaly shape. Examples of colored pigment include inorganic pigments and organic pigments.

Examples of the inorganic pigment may include carbon black, iron black, complex metal oxide black, zinc chromate, lead chromate, lead red, zinc phosphate, vanadium phosphate, calcium phosphate, aluminum phosphomolybdate, calcium molybdate, aluminum tripolyphosphate, bismuth oxide, bismuth hydroxide, basic bismuth carbonate, bismuth nitrate, bismuth silicate, hydrotalcite, zinc powder, micaceous iron oxide, calcium carbonate, barium sulfate, alumina white, silica, diatomaceous earth, kaolin, talc, clay, mica, baryta, organic bentonite, white carbon, titanium oxide, zinc flower, antimony oxide, lithopone, lead white, perylene black, molybdenum red, cadmium red, iron oxide red, cerium sulfide, chrome yellow, cadmium yellow, yellow iron oxide, yellow ocher, bismuth yellow, sienna, amber, green soil, mars violet, ultramarine blue, iron blue, basic lead sulfate, basic lead silicate, zinc sulfide, antimony trioxide, calcium compound, phthalocyanine blue, phthalocyanine green, ochre, aluminum powder, copper powder, brass powder, stainless steel powder, titanium oxide coated mica, iron oxide coated mica, zinc copper oxide, silver particles, anatase type titanium oxide, iron oxide type calcined pigment, conductive metal powder, and electromagnetic wave absorption ferrite.

Examples of the organic pigments may include quinacridone red, polyazo yellow, anthraquinone red, anthraquinone yellow, polyazo red, azo lake yellow, perylene, phthalocyanine blue, phthalocyanine green, isoindolinone yellow, watching red, permanent Red, para red, toluidine maroon, benzidine yellow, fast sky blue, and brilliant carmine 6B.

The colored pigments may be used singly or in combination of two or more of the colored pigments. The colored pigment may be at least one organic pigment, at least one inorganic pigment, or a combination thereof.

The colored pigment is preferably a colored pigment being clear in contrast at the time of observation with an optical microscope and being difficult to transmit light (easily absorbs light), more preferably a black pigment, and further preferably Chinese ink. The colored pigment is preferably a colored pigment that is not easily aggregated by secondary aggregation or interaction with CNF during observation. The colored pigment or coloring material may be a colored pigment dispersion liquid, and, for example, is Chinese ink dispersion liquids such as Chinese ink liquids, Bokuteki (specific Chinese ink liquid manufactured by Kuretake Co., Ltd), and pigment inks for ink jet printers. Chinese ink is usually a surface-treated carbon black of which surface is covered with an aqueous resin, and has excellent dispersibility when the ink is mixed with a binder resin. Therefore, Chinese ink is difficult to cause secondary aggregation and thus sufficiently high blackness can be exhibited even when the CNF dispersion liquid has a relatively low concentration. The Chinese ink liquid and Bokuteki are usually an aqueous dispersion liquid containing surface-treated carbon black. The methods for producing them are not particularly limited. Example of the method is a method for covering the surface of amorphous furnace black produced by a furnace method or the like that incompletely burns petroleum-based or coal-based oil in high temperature gas with an aqueous resin, adding a glycol type antifreezing agent and a preservative agent as needed, and mixing and slurrying the resultant mixture. The Chinese ink liquid and Bokuteki may be commercially available products (for example, "Bokuteki" manufactured by Kuretake Co., Ltd.). The method for preparing the surface-treated carbon black and the aqueous dispersion liquid containing the surface-treated carbon black is not particularly limited and can be prepared in accordance with known methods (for example, JP-A-H07-188597 and JP-A-H06-234946). The Chinese ink liquid, Bokuteki, and the pigment inks for ink jet printers may be used singly or in combination of two or more of them.

The content amount of the colored pigment in the coloring material is not limited and is usually 5 to 20% by mass. When the content amount of the colored pigment is less, it may result in a faint observation photograph of the optical microscope, whereas when the content amount of the colored pigment is large, it may generate aggregates of the colored pigment.

The average particle diameter of the colored pigment is within a range of 0.03 $\mu$m or more and 1 $\mu$m or less. The average particle diameter of the colored pigment is a value measured with a laser diffraction type particle size distribution measuring apparatus (for example, Master Sizer 3000 and Zetasizer Nano ZS manufactured by Malvern). The shape of the colored pigment may be any shapes besides a spherical shape, and the average particle diameter is the average value of the longest diameter.

(Solvent)

The solvent used for the coloring material is preferably an aqueous solvent. Examples of the aqueous solvent include water, methanol, ethanol, n-propyl alcohol, isopropyl alcohol, n-butanol, isobutanol, tertiary butanol, linear or branched pentanediol, aliphatic ketones (for example, acetone, methyl ethyl ketone, and diacetone alcohol), polyols (for example, ethylene glycol, diethylene glycol, and triethylene glycol), polyglycol having a molar mass of 200 to 2,000 g/mol, propylene glycol, dipropylene glycol, tripropylene glycol, trimethylolpropane, glycerol, thiodiglycol, 2-pyrrolidone, N-methylpyrrolidone, N-ethylpyrrolidone, 1,3-dimethylimidazolidinone, dimethylacetamide, dimethylformamide, and

combinations of two or more of these solvents.

(Optional components for coloring material)

The coloring material may include optional components in addition to the colored pigment and the solvent. The optional component preferably includes a dispersant. This enables the dispersibility of the colored pigment in the coloring material to be stabilized. Examples of the dispersant include higher fatty acids, higher fatty acid amides, metal soaps, glycerin esters, hydrotalcite, polyethylene wax, polypropylene wax, glue, gelatin, and combinations of two or more of these dispersants.

(Stirring)

The stirring at Steps (1) and (1') is usually carried out using a stirrer. The stirrer is preferably a vortex mixer. The stirring conditions may be appropriately set depending on the purpose.

(Formation of specimen)

A specimen for measuring the CNF dispersion index can be prepared by sandwiching an anion-modified cellulose nanofiber dispersion liquid so that a film having a thickness of 0.15 mm is formed between two glass plates. The two glass plates may be glass plates used for normal microscopic observation, and are usually a pair of a slide glass and a cover glass. The thickness of the glass plate is not particularly limited. It is preferable that the thickness of the glass plate positioned on the objective lens side (for example, a cover glass) when the specimen is placed on the stage of the microscope is thin so as not to disturb focusing.

(Microscope)

The microscope used for measuring the CNF dispersion index is usually an optical microscope. The optical microscope is not particularly limited and may be a general optical microscope (including a magnifier with a display device). The observation magnification at Step (3) is 100 times.

The classification of the aggregates at Step (4) is carried out in the observation range of 3 mm $\times$ 2.3 mm in the observation images observed at Step (3). Such an observation range may be randomly selected from the observation image. The aggregates are classified into the following four groups depending on the size of the aggregate: Extra-large: aggregates having a major axis of 150 $\mu$m or more, Large: aggregates having a major axis of 100 $\mu$m or more and less than 150 $\mu$m, Medium: aggregates having a major axis of 50 $\mu$m or more and less than 100 $\mu$m, and Small: aggregates having a major axis of 20 $\mu$m or more and less than 50 $\mu$m.

Calculation of the CNF dispersion index at Step (5) is carried out by counting the number of aggregates of each group classified at Step (4) and calculating in accordance with the following formula:

$$\text{CNF dispersion index} = (\text{Number of Extra-large} \times 512 + \text{Number of Large} \times 64 + \text{Number of Medium} \times 8 + \text{Number of Small} \times 1) \div 2$$

The food additive of the present invention may include at least one kind of the anion-modified CNF, and may include two or more kinds of anion-modified CNFs having different structures and the like. The food additive of the present invention may include an optional component in addition to the anion-modified CNF. Examples of the optional component include a thickening agent, a sweetener, a seasoning, a coloring agent, a flavor, an emulsifying agent, a stabilizer, a preservative agent, a pH adjusting agent, and a dispersion medium.

[2. Food]

The food additive of the present invention can be added to various foods. The "food" is usually the processed food. The processed food is a food in which at least one process is applied to a natural food, a natural food material, or a combination thereof. The processed food may be a semi-cooked product on the premise that further process is applied. The "food" also includes foodstuffs, beverages, and foods that are not intended for ingestion such as gums. The "food material" includes main food material such as livestock meat, fish meat, and plants; and subsidiary food material such

as ingredients, seasonings, sauces, tare sauces, pastes, outer packaging, and flavoring compositions. Examples of the "semi-cooked product" include foods on the premise that further heating is applied thereto (for example, retort foods and frozen foods) and foods on the premise that further kneading or mixing is applied thereto (for example, blended products (premixes) and powdered beverages). The processed foods may be in the form of retort foods, powdered foods, sheet-like foods, bottled foods, canned foods, frozen foods, and foods for microwave ovens. The food additive of the present invention can exhibit the effect of the present invention irrespective of the means of preparation at the time of use.

The anion-modified CNF can exhibit the effects such as dispersion/suspension stabilizers, emulsion stabilizers, thickening stabilizers, foam stabilizers, shape retainers, water retainers, and powdered base materials. When the anion-modified CNF is added to the foods, these effects can be exhibited without impairing the characteristics such as original texture and/or flavor of the foods. Therefore, the anion-modified CNF is useful as the active component of the food additive.

A method for adding the food additive to the food is not particularly limited. Example of the method is a method that includes mixing the food and the food additive. The addition may be carried out at the timing until the food is eaten, and processing such as cooking may be carried out either or both of before and after the addition.

The food including the food additive of the present invention may be a food in which the food additive of the present invention is mixed, or a combination product on the premise that the food and the food additive of the present invention are mixed at the time of eating (for example, a set of the individually packaged food and the individually packaged food additive of the present invention). The food of the present invention may include the food additive of the present invention, and may also include any other food additives.

(Example of foods)

The food as a target of the food additive is not particularly limited as long as the food can be prepared from commonly used food materials. Examples of such a food include fried foods (for example, croquette, cream croquette, and fried cake of minced meat); tare sauce foods (for example, tare sauce for "yaki-niku" (meat dish), tare sauce for "yaki-tori" (grilled chicken), tare sauce for "Yaki-zakana" (grilled fish), tare sauce for "Yasai-itame" (sauteed vegetable), foods seasoned with these tare sauces (for example, livestock meat, fish meat, and vegetable)); dispersion type beverages (for example, cocoa beverage, powdered green tea beverage, fruit juice beverage, fruit pulp/juice sack-contained beverage, jelly-contained beverage, lactic acid bacteria beverage, sports drink, and "shiruko" (sweet red-bean soup with rice cake); and cereal flour processed foods (for example, noodles (Chinese noodle, "udon" (Japanese wheat flour noodle), pasta, or the like), bread, western confectionery such as donut, and Japanese confectionery such as "mochi" (rice cake made from "mochigome," non-glutinous rice), "dango" (Japanese dumpling), and "senbei" (Japanese rice cracker).

The fried food usually includes an ingredients depending on the kinds of fried food and coating material applied to the outer surface of the ingredients. The food additive of the present invention may be included in the ingredient of the fried food, may be included in the coating material, or may be included in both of the ingredient and the coating material. The food additive is preferably included in the ingredient because puncture during cooking with oil can be prevented. When the fried food is a cream croquette, the food additive of the present invention is preferably included in the ingredient because melting in mouth can be improved. The fried food including the food additive of the present invention may have good shape retention.

The tare sauce foods including the food additive of the present invention can prevent the tare sauce from dripping even after heating without involving a rise in viscosity and change in texture, and can have good water retention.

The dispersion type beverage including the food additive of the present invention can reduce precipitation of components, and can have good dispersion stability.

The cereal flour being the raw material of the cereal flour processed food is not particularly limited, and examples thereof include wheat flour (hard wheat flour, medium wheat flour, and soft wheat flour), rice flour ("joshinko"(top-grade rice flour made from non or short-glutinous rice), "shiratamako" (rice flour made from uncooked glutinous rice, usually for dumplings), and "mochiko"(sticky rice flour made from cooked glutinous rice)), "sobako" (buckwheat flour), "katakuriko" (potato starch flour), corn flour, and a combination of two or more selected from these cereal flours. The cereal flour preferably includes at least wheat flour. The cereal flour processed food including the food additive of the present invention can have chewy texture, and can have good shape retention.

(Optional food additive)

The optional food additive can be used in combination with the food additive of the present invention as long as the optional food additive does not adversely affect the effect of the present invention, as needed. Examples of the optional food additive include a thickening agent, a sweetener, a seasoning, a coloring agent, a flavor, an emulsifying agent, a stabilizer, a preservative agent, a pH adjusting agent, a dispersion medium, and any combination of two or more selected from these optional food additives. Examples of the thickening agent include guar gum, lamda-carrageenan, xanthan gum, locust bean gum, tara gum, iota-carrageenan, kappa-carrageenan, cassia gum, glucomannan, native type gellan gum, deacyl type gellan gum, tamarind seed polysaccharide, pectin, psyllium seed gum, tragacanth gum, karaya gum, gum arabic, macrohomopsis gum, rhamsan gum, agar, alginic acid (alginic acid, alginate), curdlan, pullulan, cellulose derivatives such as carboxymethyl cellulose (CMC) sodium, carboxymethyl cellulose (CMC) calcium, methyl cellulose (MC), hydroxypropylmethyl cellulose (HPMC), hydroxypropyl cellulose (HPC), and hydroxyethyl cellulose (HEC), microcrystalline cellulose, fermented cellulose, gelatin, water-soluble soybean polysaccharide, starch, and processed starch. The amount of optional food additive to be added may be determined to be any ratio.

(Amount to be added and content amount of food additive)

The food of the present invention may include the food additive of the present invention in an arbitrary content amount. The food additive is preferably included in consideration of an effective amount of the anion-modified CNF. The amount of the anion-modified CNF to be added to the food is preferably in a range of 0.001 to 0.5% by mass. The amount to be added may be appropriately adjusted depending on the kinds of food, and quality and physical properties to be targeted. For example, the processed food to be produced includes the food additive in a range of 0.05 to 0.2% by mass in the case of the cream croquette of the fried food, in a range of 0.01 to 0.3% by mass in the case of the dispersion type beverage, and in a range of 0.001 to 0.1% by mass in the case of the tare sauce for "yakitori". When the amount of the anion-modified CNF to be added is less than above lower limit, it may fail to provide sufficient effect to the foods or the food materials. When the amount to be added is more than above upper limit, it may cause disadvantages such as an increase in the viscosity of the processed food and heavy texture.

In the case of combination use of the anion-modified CNF with the above thickening agent, the ratio of the amount of the anion-modified CNF to be added and the amount of the thickening agent to be added may be determined to be any ratio.

EXAMPLES

Hereinafter, the present invention will be described in more detail with reference to Examples. The present invention, however, is not limited thereto. Incidentally, in the descriptions of Examples, unless otherwise specified, % represents % by mass, part represents part by mass, and concentration represents solid content concentration relative to the total amount.

<Preparation Example 1: Preparation of carboxymethylated (CM-modified) CNF>

A carboxymethylated cellulose nanofiber was prepared as the anion-modified cellulose nanofiber in the following manner.

200 g in dry mass of pulp (NBKP (softwood bleached kraft pulp), manufactured by Nippon Paper Industries Co., Ltd.) and 111 g in dry mass of sodium hydroxide were charged into a stirrer capable of mixing pulp, and water was added so that the pulp solid content was 20% (w/v). Thereafter, the resultant mixture was stirred at 30°C for 30 minutes, and then 216 g (in terms of active component) of sodium monochloroacetate was added. Subsequently, the resultant mixture was further stirred for 30 minutes, and thereafter the temperature was raised to 70°C, followed by stirring the mixture for 1 hour. Thereafter, the reactant was taken out, neutralized, and washed to obtain a carboxymethylated pulp having a substitution degree of carboxymethyl per glucose unit of 0.25, a degree of crystallization of cellulose I-type crystal of 65%, and a ratio of the degree of crystallization of cellulose crystal II-type to the degree of crystallization of cellulose crystal I-type of 50%. Thereafter, water was added to the carboxymethylated pulp so that the solid content of the pulp was 1%, and the resultant product was fibrillated by treatment with a high pressure homogenizer at 20°C and at a pressure of 150 MPa five times to obtain a carboxymethylated cellulose nanofiber dispersion liquid. The obtained fiber had an average fiber diameter of 50 nm and an aspect ratio of 120. Carboxymethylated cellulose nanofiber powder (CM-modified CNF powder) was obtained by subjecting the resultant carboxymethylated cellulose nanofiber to freeze-drying into powder form.

<Measurement>

In the Examples, each parameter was measured as follows.

(Measurement of substitution degree of carboxymethyl (DS) per glucose unit)

About 2.0 g of carboxymethylated cellulose fiber (absolutely dried) was precisely weighed and placed in a 300 mL stoppered Erlenmeyer flask. 100 mL of a liquid obtained by adding 100 mL of special grade concentrated nitric acid

to 1,000 mL of methanol nitrate was added into the flask, and then the resultant mixture was shaken for 3 hours to convert a salt type carboxymethylated cellulose (salt type CM-modified cellulose) into an acid type carboxymethylated cellulose (H-type CM-modified cellulose). 1.5 to 2.0 g of the H-type CM-modified cellulose (absolutely dried) was precisely weighed and placed in a 300 mL stoppered Erlenmeyer flask. The H-type CM-modified cellulose was wet with 15 mL of 80% methanol, and 100 mL of 0.1 N NaOH was added thereto, followed by shaking the resultant mixture at room temperature for 3 hours. Excessive NaOH was back-titrated with 0.1 N $H_2SO_4$ using phenolphthalein as an indicator, and DS was calculated by the following formula:

$$A = [(100 \times F - (0.1\ N\ H_2SO_4)\ (mL) \times F') \times 0.1]/(\text{Absolutely dried mass of H-type CM-modified cellulose (g)})$$

$$DS = 0.162 \times A/(1 - 0.058 \times A)$$

A: Amount of 1 N NaOH (mL) required for neutralization of 1 g of H type CM-modified cellulose
F': Factor of 0.1 N $H_2SO_4$
F: Factor of 0.1 N NaOH

(Measurement of average fiber diameter and aspect ratio)

The average fiber diameter and average fiber length of the anion-modified CNF were analyzed for randomly selected 200 fibers using a field emission type scanning electron microscope (FE-SEM). The aspect ratio was calculated by the following formula:

$$\text{Aspect ratio} = \text{Average fiber length}/\text{Average fiber diameter.}$$

(Measurement of degree of crystallization)

The degree of crystallization of cellulose I-type crystal and the ratio of I-type and II-type were determined by the following measurement. The degree of crystallization of the cellulose was calculated from the peak of the diffraction angle 2θ of the graph obtained by the measurement with a wide angle X-ray diffraction method. The procedure is as follows. Firstly, cellulose was frozen with liquid nitrogen, and the frozen cellulose was compressed to prepare a tablet pellet. Thereafter, X-ray diffraction was measured using this sample with an X-ray diffraction measurement apparatus (LabX XRD-6000, manufactured by Shimadzu Corporation). The peaks in the obtained graph are separated by graph analysis software PeakFit (manufactured by HULINKS Inc.) and the crystal I-type, II-type, and an amorphous were distinguished on the basis of the following diffraction angles. Incidentally, the ratio of crystal I-type and II-type was calculated from the area ratio of the above peaks.

Crystal I-Type: 2θ = 14.7°, 16.5°, and 22.5°
Crystal II-Type: 2θ = 12.3°, 20.2°, and 21.9°
Amorphous component: 2θ = 18°

Subsequently, the degree of crystallization of cellulose I-type was calculated from the values of diffraction intensity ($I_a$) at 18° and of diffraction intensity ($I_c$) at 22.5° by the following equation called as Segal method.

$$\text{Degree of crystallization of I-type} = (I_c - I_a)/I_c \times 100$$

(Measurement of CNF dispersion index)

1 g of a 1.0% by mass dispersion liquid was prepared by adding the CM-modified CNF powder to water at 25°C, and the prepared dispersion liquid was stirred for 5 minutes with a vortex mixer (instrument name: Automatic Labmixer HM-10H, manufactured by IUCHI Co., Ltd.) of which the scale of the rotation number was set at maximum. Subsequently, two drops of Bokuteki (manufactured by Kuretake Corporation, solid content 10%) were added dropwise, and the resultant mixture was stirred for 1 minute with the vortex mixer of which the scale of the rotation number was set at maximum. The average particle diameter of Bokuteki was measured three times using Zetasizer Nano ZS (manufactured by Malvern Instruments Co., Ltd.). The average value thereof was 0.22 μm. A specimen (film thickness 0.15 mm) was prepared by dropping the dispersion liquid on a slide glass, followed by placing a cover glass thereon. The prepared specimen was observed using an optical microscope (Digital Microscope KH-8700 (manufactured by Hirox Corporation)) at a magnification of 100 times. The CNF dispersion index was determined as described above based on the number of aggregates having each size obtained as a result of observation.

[Examples 1-1, 1-2, and Comparative Example 1: Tare sauce for yakitori]

Tare sauce for yakitori was prepared in accordance with the preparation method described below based on the recipe in Table 1. A tare sauce obtained by adding the xanthan gum was designated as Comparative Example 1, and a tare sauce obtained by adding the CM-modified CNF powder ("CNF solid substance" in Table 1) was designated as Example 1-1. A tare sauce prepared in the same manner as in Example 1-1 except that xanthan gum and CNF were not added was designated as a blank. For these tare sauce foods, the effect of preventing the tare sauce from dripping and the texture were evaluated. Evaluation results are shown in Table 2. A 1.0% by mass of aqueous dispersion liquid (CM-modified CNF aqueous dispersion liquid) of the CM-modified CNF powder was prepared, and the CNF dispersion index thereof was measured. As a result, the CNF dispersion index was 27. A tare sauce was prepared in the same manner as in Example 1-1 except for using this CM-modified CNF aqueous dispersion liquid ("CNF dispersion liquid" in Table 1) instead of the CM-modified CNF powder was designated as Example 1-2, and evaluated in the same manner as in Example 1-1.

[Table 1]

Table 1

| Soy based sauce recipe | Blank | Comparative Example 1 | Example 1-1 | Example 1-2 |
|---|---|---|---|---|
| Dark soy sauce | 32 | 32 | 32 | 32 |
| Mirin | 14 | 14 | 14 | 14 |
| Liquid sugar of fructose and glucose | 10 | 10 | 10 | 10 |
| Sugar | 12 | 12 | 12 | 12 |
| Sodium glutamate | 0.1 | 0.1 | 0.1 | 0.1 |
| Processed starch | 5 | 5 | 5 | 5 |
| Xanthan gum (SAN-ACE, manufactured by San-Ei Gen F. F. I., Inc.) | - | 0.1 | - | - |
| CNF solid product | - | - | 0.005 | |
| CNF dispersion liquid | | | | 0.5 |
| Correcting whole amount with ion exchanged water | 100 | 100 | 100 | 100 |
| The unit of each value in Table 1 is % by mass. | | | | |

<Method for preparing tare sauce>

1. For Comparative Example 1 and Example 1-1, the food additive (xanthan gum (Comparative Example 1) and CM-modified CNF powder (Example 1-1)) was added to ion-exchanged water, and stirred at 80°C for 10 minutes to dissolve the food additive. The CM-modified CNF was treated with a homogenizer (15 MPa) after stirring.
2. Components other than dark soy sauce and mirin were mixed at room temperature. The resultant mixture was heated to 85°C and thereafter mixed for 10 minutes with stirring.
3. The dark soy sauce and the mirin were further added, and the whole amount was corrected with ion exchanged water. Thereafter, the tare sauces were hot-packed in a screw bottle after the temperature reached to 90°C.

For Example 1-2, Steps 2 and 3 were carried out except for using the 1.0% by mass of CM-modified CNF aqueous dispersion liquid instead of the treatment liquid used in Example 1-1.

<Evaluation method>

- Viscosity: Measurement was carried out under conditions of a measuring temperature of 60°C and rotation numbers of 6 rpm and 60 rpm for 1 minute using a B type rotational viscometer.

- Dripping: 20 g of the prepared sample was placed on a tray inclining at 20°, and left to stand in a constant temperature bath at 60°C. After 1 hour, dripping of the tare sauce was measured. If the tare sauce is dripped, the shape of the tare sauce becomes an elliptical shape. Therefore, the major axis of the ellipsoid was measured.

[Table 2]

Table 2

| | Viscosity (mPa·s) | | Major axis of dripping (cm) | Effect of preventing the tare sauce from dripping | Texture |
|---|---|---|---|---|---|
| | 6rpm | 60rpm | | | |
| Blank | 20,600 | 4,720 | 8.9 | × | Smooth and good |
| Comparative Example 1 | 26,700 | 5,680 | 6.9 | ○ | Slimy |
| Example 1-1 | 21,700 | 4,800 | 6.5 | ○ | Smooth and good |
| Example 1-2 | 21,400 | 4,720 | 6.3 | ○ | Smooth and good |

<Result>

The tare sauces of Examples 1-1 and 1-2 prepared by adding the CM-modified CNF effectively prevented the tare sauce from dripping at high temperature storage while the tare sauces had the same viscosity as that of the blank. The texture was also as smooth and good as the texture of the tare sauce of blank. On the other hand, although the tare sauce of Comparative Example 1 prepared by adding the xanthan gum had the same degree of the effect of preventing the tare sauce from dripping as those of Examples 1-1 and 1-2, the texture was unpleasant slimy texture. This result indicates that the tare sauce food including the food additive of the present invention effectively prevents the tare sauce from dripping without increase in viscosity and change in texture.

[Examples 2 to 4, and Comparative Examples 2 to 4; cream croquette]

Cream croquettes were prepared based on the recipe in Table 3. In Comparative Examples 2 to 4, each cream croquette was prepared by adding the methyl cellulose (MC, Comparative Example 2), the hydroxypropylmethyl cellulose (HPMC, Comparative Example 3), or hydroxypropyl cellulose (HPC, Comparative Example 4). In the Examples, cream croquettes (Examples 2 to 4) were prepared by adding the CM-modified CNF powder ("CNF" in Table 3) obtained in Preparation Example 1 in amounts as shown in Table 3. Ten pieces of each cream croquette were prepared, and the

occurrence of puncture during cooking with oil was determined as an indicator of shape retention confirmation. The results are shown in Table 4.

[Table 3]

Table 3

| Cream croquette recipe | Blank | Comp. Ex. 2 | Comp. Ex. 3 | Comp. Ex. 4 | Ex. 2 | Ex. 3 | Ex. 4 |
|---|---|---|---|---|---|---|---|
| Baked wheat flour | 6 | 6 | 6 | 6 | 6 | 6 | 6 |
| skim milk | 5.4 | 5.4 | 5.4 | 5.4 | 5.4 | 5.4 | 5.4 |
| Salad oil | 3 | 3 | 3 | 3 | 3 | 3 | 3 |
| Margarine | 2 | 2 | 2 | 2 | 2 | 2 | 2 |
| Gelatin | 1.0 | 1.0 | 1.0 | 1.0 | 1.0 | 1.0 | 1.0 |
| Salt | 0.5 | 0.5 | 0.5 | 0.5 | 0.5 | 0.5 | 0.5 |
| Seasoning (amino acid and the like) | 0.6 | 0.6 | 0.6 | 0.6 | 0.6 | 0.6 | 0.6 |
| White pepper | 0.1 | 0.1 | 0.1 | 0.1 | 0.1 | 0.1 | 0.1 |
| Milk | 30.0 | 30.0 | 30.0 | 30.0 | 30.0 | 30.0 | 30.0 |
| Methyl cellulose (MC) (METOLOSE MCE-4000, manufactured by Shin-Etsu Chemical Co., Ltd.) | - | 0.75 | - | - | - | - | - |
| Hydroxypropylmethyl cellulose (HPMC) (METOLOSE SFE-4000, manufactured by Shin-Etsu Chemical Co., Ltd.) | - | - | 0.75 | - | - | - | - |
| Hydroxypropyl cellulose (HPC) (Klucel Nutra W, manufactured by San-Ei Gen F. F. I., Inc.) | - | - | - | 1.00 | | | |
| CNF | - | - | - | - | 0.10 | 0.15 | 0.2 |
| Correcting whole amount with ion exchanged water | 100 | 100 | 100 | 100 | 100 | 100 | 100 |
| The unit of each value in Table 3 is % by mass. | | | | | | | |

<Preparation method>

1. Each polysaccharide (MC, HPMC, HPC, and CM-modified CNF powder) was added to ion exchanged water in advance, and dissolved by stirring at 80°C for 10 minutes. The CM-modified CNF powder was treated with a homogenizer (15 MPa) after stirring.
2. The remaining raw materials were added to the solution obtained at above 1 and the resultant mixture was heated to 85°C, followed by correcting the whole amount with ion exchanged water.
3. The raw material mixture obtained at above 2 was divided into 20 g/piece and the divided mixture was molded, followed by cooling the molded product to 4°C.
4. The cooled product obtained at above 3 was battered and was quickly freezing-preserved at -40°C overnight.
5. The freezing-preserved product obtained at above 4 in a frozen state was cooked with oil at 180°C for 4 minutes.

<Evaluation method>

- Viscosity: Measurement was carried out under conditions of a measuring temperature of 80°C and rotation numbers of 6 rpm and 60 rpm for 1 minute using a B type rotational viscometer.

- Puncture: Ten pieces of cream croquette were cooked with oil in each test section, and the number of punctured cream croquettes during cooking with oil was visually determined.

- Melt in mouth feeling: Texture was evaluated at 30 minutes after cooking with oil.

(Evaluation criteria for melt in mouth) The good croquette was determined to be 5. The number is decreased for the croquette with undesirable heavy and sticky texture.

[Table 4]

Table 4

| | Viscosity (mPa·s) | | Number of punctures (in 10 samples) | Puncture rate (%) | Melt in mouth | Detailed evaluation of melt in mouth |
|---|---|---|---|---|---|---|
| | 6rpm | 60rpm | | | | |
| Blank | 7,200 | 2,800 | 10 | 100 | - | Impossible to be evaluated because of outflow of the ingredient due to puncture. |
| Comp. Ex. 2 | 12,100 | 4,500 | 0 | 0 | 1 | Poor melt in mouth due to highly viscous sticky texture. |
| Comp. | 11,500 | 4,300 | 3 | 30 | 2 | Poor melt in mouth due to highly |
| Ex. 3 | | | | | | viscous sticky texture. |
| Comp. Ex. 4 | 9,000 | 3,300 | 10 | 100 | - | Impossible to be evaluated because of outflow of the ingredient due to puncture. |
| Ex. 2 | 18,300 | 4,600 | 1 | 10 | 5 | Better melt in mouth than those of any Comparative Examples. |
| Ex. 3 | 21,000 | 4,900 | 0 | 0 | 4.5 | Good melt in mouth |
| Ex. 4 | 22,500 | 5,200 | 0 | 0 | 4 | Starting to feel slight sticky felling and merely heavier melt in mouth than that of Example 3. |

<Result>

The cream croquettes of Examples 2 to 4 prepared by adding the CM-modified CNF powder did not cause puncture during cooking with oil, and the melt in mouth feeling thereof were also good. On the other hand, in Comparative Example 4 prepared by adding the HPC, the cream croquette was not able to be obtained by the puncture during cooking with oil. The cream croquettes of Comparative Example 2 prepared by adding the MC and Comparative Example 3 prepared by adding the HPMC did not cause puncture during cooking with oil, but the melt in mouth feeling were poor. Therefore, the evaluation as a cream croquette was clearly divided for Comparative Examples and Examples. These results indicate that the fried food including the food additive of the present invention has good shape retention without impairing original properties such as texture, and flavor.

[Examples 5 and 6, and Comparative Examples 5 to 8; cocoa beverage]

Cocoa beverages were prepared based on the recipe in Table 5. In the comparative examples, cocoa beverages were prepared by adding the carboxymethyl cellulose (CMC) sodium (Comparative Examples 5 and 6) and microcrystalline cellulose preparation (Comparative Examples 7 and 8) in amounts as shown in Table 5. In the Examples, cocoa beverages (Examples 5 and 6) were prepared by adding the CM-modified CNF powder ("CNF" in Table 5) obtained in Preparation Example 1 in amounts as shown in Table 5. The viscosity (immediately after preparation) of each cocoa beverage was measured, and the degree of precipitation and the suspension rate were evaluated when the cocoa beverage was stored at 37°C and 60°C for 2 weeks. The results are shown in Table 6.

[Table 5]

Table 5

| Cocoa beverage recipe | Comp. Ex. 5 | Comp. Ex. 6 | Comp. Ex. 7 | Comp. Ex. 8 | Ex. 5 | Ex. 6 |
|---|---|---|---|---|---|---|
| Milk | 20 | 20 | 20 | 20 | 20 | 20 |
| Sugar | 6 | 6 | 6 | 6 | 6 | 6 |
| Cocoa powder | 1 | 1 | 1 | 1 | 1 | 1 |
| Sucrose ester of fatty acid | 0.08 | 0.08 | 0.08 | 0.08 | 0.08 | 0.08 |
| CMC sodium (F04HC, manufactured by NIPPON PAPER INDUSTRIES CO., LTD.) | 0.2 | 0.3 | - | - | - | - |
| Microcrystalline cellulose preparation (CEOLUS SC-900, manufactured by Asahi Kasei Corporation) | - | - | 0.2 | 0.3 | - | - |
| CNF | - | - | - | - | 0.2 | 0.3 |
| Correcting whole amount with ion exchanged water | 100 | 100 | 100 | 100 | 100 | 100 |
| The unit of each value in Table 5 is % by mass. | | | | | | |

<Preparation method>

1. Powder mixture of Sugar, sucrose ester of fatty acid, and each food additive (CMC sodium, microcrystalline cellulose preparation, and CM-modified CNF powder) were added to ion exchanged water, and the resultant mixture was stirred at 80°C for 10 minutes to dissolve.
2. Milk and cocoa powder were added to the solution obtained at above 1, and the whole amount was corrected with ion exchanged water.
3. The solution obtained at above 2 was warmed and after the temperature of the solution was reached to 75°C, the solution was treated with a homogenizer (15 MPa).
4. The solution obtained at above 3 was cooled, sterilized by an UHT method (Ultra high temperature heating method) at 142°C for 60 seconds, and filled in a PET container.

<Evaluation conditions>

- Viscosity: Measurement was carried out under conditions of a measuring temperature of 8°C and a rotation numbers of 60 rpm for 1 minute using a B type rotational viscometer.

- Storage test: The precipitation and the suspension rate after 2 weeks storage at 37°C or 60°C were evaluated by the following procedure.

- Precipitation: The container was turned upside down and the state of the bottom was visually evaluated. (Evaluation criteria) Good - < ± < + < ++ < +++ Poor

- Suspension rate: Calculated in accordance with the following formula.

$$[(\text{Height of dispersed layer})/(\text{Height of liquid})] \times 100\%$$

[Table 6]

Table 6

| | Additives | Amount to be added | Viscosity (mPa·s) | Storage test for two weeks | | | |
|---|---|---|---|---|---|---|---|
| | | | | 37°C | | 60°C | |
| | | | | Precipitation | Suspension rate (%) | Precipitation | Suspension rate (%) |
| Comp. Ex. 5 | CMC sodium | 0.2% | 8.5 | +++ | 13 | +++ | 6.5 |
| Comp. Ex. 6 | CMC sodium | 0.3 % | 10 | +++ | 19.6 | +++ | 15.2 |
| Comp. Ex. 7 | Microcrystalline cellulose preparation | 0.2 % | 7.2 | + | 65 | + | 41 |
| Comp. Ex. 8 | Microcrystalline cellulose preparation | 0.3 % | 8.5 | + to ± | 100 | + | 63 |
| Ex. 5 | CNF | 0.2 % | 16.4 | - | 100 | - | 100 |
| Ex. 6 | CNF | 0.3 % | 47.7 | - | 100 | - | 100 |

<Result>

As shown in Table 6, the cocoa beverages using the CM-modified CNF (Examples 5 and 6) inhibit the precipitation after the storage at both 37°C and 60°C, and the suspension rates were 100%. On the other hand, the cocoa beverages using CMC sodium and the microcrystalline cellulose preparation (Comparative Examples 5 to 8) tended to decrease the suspension rate because of generating the precipitation after the storage. This indicates that the food additive of the present invention can improve the dispersion stability of the dispersion type beverage that was not sufficient when other food additives were used.

[Examples 7 to 9, and Comparative Examples 9 and 10; Chinese noodle]

Chinese noodles (chilled products) were prepared based on the recipe in Table 7. In Examples, Chinese noodles were prepared by adding the CM-modified CNF powder ("CNF" in Table 7) obtained in Preparation Example 1 in amounts of 0.1% by mass, 0.2% by mass, and 0.3% by mass was added (Examples 7, 8, and 9, respectively). In Comparative Examples, Chinese noodles were prepared by adding the microcrystalline cellulose preparation and microfibrous cellulose (cellulose nanofibers having different physical properties) (Comparative Examples 9 and 10, respectively). A Chinese noodle prepared without adding any of the CM-modified CNF powder, microcrystalline cellulose preparation, and microfibrous cellulose was designated as the blank.

The texture, the degree of elution into "Yudejiru" (the liquid obtained after boiling noodles) (measured by the turbidity of the Yudejiru) and the elongation rate after boiling of Chinese noodles were measured. The results are shown in Table 8.

The amounts of the microcrystalline cellulose preparation and microfibrous cellulose to be added were adjusted so that the addition amount of polysaccharide to the Chinese noodles was 0.2% by mass.

[Table 7]

Table 7

| | Blank | Ex. 7 | Ex. 8 | Ex. 9 | Comp. Ex. 9 | Comp. Ex. 10 |
|---|---|---|---|---|---|---|
| 1 Wheat flour | 100.0 | 100.0 | 100.0 | 100.0 | 100.0 | 100.0 |
| 2 Salt | 1.0 | 1.0 | 1.0 | 1.0 | 1.0 | 1.0 |
| 3 Potassium carbonate | 0.9 | 0.9 | 0.9 | 0.9 | 0.9 | 0.9 |
| 4 Sodium carbonate | 0.6 | 0.6 | 0.6 | 0.6 | 0.6 | 0.6 |
| 5 CNF | - | 0.1 | 0.2 | 0.3 | - | - |
| 6 Microcrystalline cellulose preparation (CEOLUS DX-3, manufactured by Asahi Kasei Corporation) | - | - | - | - | 0.37 | - |
| 7 Microfibrous cellulose (CELISH FD100G, manufactured by DAICEL FINECHEM LTD.) | - | - | - | - | - | 2.0 |
| 8 Ion exchanged water | 35.0 | 35.0 | 35.0 | 35.0 | 35.0 | 33.0 |
| Total (part) | 137.5 | 137.6 | 137.7 | 137.8 | 137.9 | 137.5 |
| The unit of each value in Table 7 is % by mass when the mass of the wheat flour is determined to be 100% by mass. | | | | | | |

<Preparation method>

1) Any one of the components 5 to 7 was added to ion exchanged water of the component 8 in Table 7, and the resultant mixture was stirred for 10 minutes to dissolve.
2) The liquid obtained at above 1 was subjected to homogenization treatment (first stage 10 MPa and second stage 5 MPa).
3) The components 2 to 4 in Table 7 were added to the liquid after the homogenization treatment obtained at above 2, and the resultant mixture was stirred.
4) The component 1 in Table 7 was charged to a noodle making machine, subsequently the liquid obtained at above 3 was added and the resultant mixture was mixed. Thereafter, Chinese noodle having a cross-section of 2 mm square was prepared.
5) The Chinese noodle obtained at above 4 was boiled for 2 minutes and 30 seconds, and thereafter tightened them with running water for 30 seconds.

<Evaluation>

• Texture

Seven trained raters ate the Chinese noodles, the sensory evaluation of hardness and stickiness of the Chinese noodles was carried out in accordance with the following criteria, and the average values of 7 raters were calculated. The Chinese noodle having a good balance between the hardness and stickiness is determined that the whole noodle has elastic and chewy texture.

Evaluation of hardness: 1 (Soft) to 10 (Hard)
Evaluation of stickiness: 1 (Fragile) to 10 (Sticky)

• Degree of elution into Yudejiru

The Yudejiru at above 5 of the preparation method was recovered and homogenized with a homomixer. Thereafter, turbidity of the Yudejiru was measured at a wavelength of 720 nm (measuring apparatus name: spectrophotometer).

By measuring the turbidity of the Yudejiru, the extent of elution of the components from the noodles into the

Yudejiru can be figured out. It can be assumed that the elution and the decrease in yield are suppressed in the case of low turbidity. In addition, it is possible to prepare a clear soup by suppressing the turbidity due to elution of the components from the noodle during cooking a ramen noodle.

• Elongation rate after boiling

The volume of the noodle just immediately after the boiling for 2 minutes and 30 seconds at above 5 in the preparation method and the volume of the noodle further immersed in the Yudejiru for 10 minutes were measured (measurement method: the horizontal length and the vertical length of the square shaped cross section of the noodle were measured with a vernier caliper. The length of noodle was measured with a ruler. Horizontal length of cross section × vertical length cross section × Length = Volume). The ratio of the volume after 10 minutes to the volume just immediately after the boiling for preparing was taken as the elongation rate after boiling.

A low elongation rate after boiling indicates that the texture of noodles can be maintained in a state close to the texture just immediate after the boiling for preparation.

[Table 8]

**Table 8**

| | | Blank | Ex. 7 | Ex.8 | Ex.9 | Comp. Ex. 9 | Comp. Ex. 10 |
|---|---|---|---|---|---|---|---|
| Sensory evaluation of texture | Hardness | 5 | 6.3 | 7.6 | 7.6 | 5.2 | 6 |
| | Stickiness | 5 | 5.3 | 6.6 | 7.6 | 5.4 | 5.4 |
| Turbidity of Yudejiru | Absorbance | 1.32 | 0.92 | 0.93 | 0.84 | 1.35 | 0.99 |
| Elongation reduction after boiling | Just Immediately after boiling for preparing ($cm^3$) | 1.43 | 1.38 | 1.33 | 1.33 | 1.41 | 1.49 |
| | After 10 minutes ($cm^3$) | 2.61 | 2.21 | 1.93 | 1.75 | 2.3 | 2.39 |
| | Elongation rate (%) | 182.5 | 160.1 | 145.1 | 131.6 | 163.1 | 160.4 |

<Result>

From the results in Table 8, the Chinese noodles obtained in Examples 7 to 9 prepared by adding the CM-modified CNF powder obtained higher ratings in hardness and stickiness at any addition amount than those in Comparative Examples 9 and 10 using other cellulose-based food additives. In other words, it is found that Chinese noodles in Examples provide the elastic and chewy texture as compared with the Chinese noodles in Comparative Examples.

The Chinese noodles in Examples 7 to 9 prepared by adding the CM-modified CNF power have the lower turbidity of the Yudejiru than that of the Chinese noodles in Comparative Examples 9 and 10 prepared by adding other cellulose-based food additives. Therefore, it is found that, in Examples 7 to 9, the elution of the components of the noodles into the Yudejiru is suppressed during boiling the noodle.

It is also found that the Chinese noodles in Examples 7 to 9 prepared by adding the CM-modified CNF powder result in suppression in the elongation rate after boiling of the noodle as compared with the Chinese noodles in Comparative Examples 9 and 10 and blank.

These results indicate that the food additive of the present invention can improve the shape retention of the cereal flour processed food.

## Claims

**1.** A food additive, comprising an anion-modified cellulose nanofiber.

**2.** The food additive according to claim 1, wherein a substitution degree of carboxymethyl per glucose unit of the anion-modified cellulose nanofiber is within a range of 0.01 to 0.50.

3. The food additive according to claim 1 or 2, wherein a water content of the anion-modified cellulose nanofiber is 12% by mass or less and a CNF dispersion index of the anion-modified cellulose nanofiber determined by the following Steps of (1) to (5) is 8,000 or less:

Step (1): a step of adding the anion-modified cellulose nanofiber to water at 25°C, stirring the resultant mixture for 5 minutes to obtain a 1.0% by mass of anion-modified cellulose nanofiber dispersion liquid, adding a coloring material including 5 to 20% by mass of a colored pigment having an average particle diameter of 0.03 $\mu$m or more and 1 $\mu$m or less to 1 g of the dispersion liquid, and stirring the resultant mixture for 1 minute to obtain an anion-modified cellulose nanofiber dispersion liquid including the coloring material;
Step (2): a step of sandwiching the anion-modified cellulose nanofiber dispersion liquid including the coloring material obtained at Step (1) between two glass plates to form a film having a thickness of 0.15 mm between the two glass plates;
Step (3): a step of observing the film obtained at Step (2) with a microscope (magnification: 100 times);
Step (4): a step of measuring major axes of aggregates existing in a range of 3 mm $\times$ 2.3 mm in the film observed at Step (3) to classify the aggregates into Extra-large: aggregates having a major axis of 150 $\mu$m or more, Large: aggregates having a major axis of 100 $\mu$m or more and less than 150 $\mu$m, Medium: aggregates having a major axis of 50 $\mu$m or more and less than 100 $\mu$m, and Small: aggregates having a major axis of 20 $\mu$m or more and less than 50 $\mu$m; and
Step (5): a step of calculating the CNF dispersion index by substituting number of aggregates of each group classified at Step (4) into the following equation:

CNF dispersion index = (Number of Extra-large aggregates × 512 + Number of Large aggregates × 64 + Number of Medium aggregates × 8 + Number of Small aggregates × 1) ÷ 2.

4. The food additive according to claim 1 or 2, wherein a water content of the anion-modified cellulose nanofiber is more than 12% by mass and a CNF dispersion index of the anion-modified cellulose nanofiber determined by the following Steps of (1') to (5) is 8,000 or less:

Step (1'): a step of controlling the water content of the anion-modified cellulose nanofiber to obtain a 1.0% by mass of anion-modified cellulose nanofiber dispersion liquid, adding a coloring material including 5 to 20% by mass of a color pigment having an average particle diameter of 0.03 $\mu$m or more and 1 $\mu$m or less to 1 g of the dispersion liquid, and stirring the resultant mixture for 1 minute to obtain an anion-modified cellulose nanofiber dispersion liquid including the coloring material;
Step (2): a step of sandwiching the anion-modified cellulose nanofiber dispersion liquid including the coloring material obtained at Step (1') between two glass plates to form a film having a thickness of 0.15 mm between the two glass plates;
Step (3): a step of observing the film obtained at Step (2) with a microscope (magnification: 100 times);
Step (4): a step of measuring major axes of aggregates existing in a range of 3 mm $\times$ 2.3 mm in the film observed at Step (3) to classify the aggregates into Extra-large: aggregates having a major axis of 150 $\mu$m or more, Large: aggregates having a major axis of 100 $\mu$m or more and less than 150 $\mu$m, Medium: aggregates having a major axis of 50 $\mu$m or more and less than 100 $\mu$m, and Small: aggregates having a major axis of 20 $\mu$m or more and less than 50 $\mu$m; and
Step (5): a step of calculating the CNF dispersion index by counting a number of aggregates of each group classified at Step (4), and substituting the number into the following equation:

CNF dispersion index = (Number of Extra-large aggregates × 512 + Number of Large aggregates × 64 + Number of Medium aggregates × 8 + Number of Small aggregates × 1) ÷ 2.

**5.** A tare sauce food, comprising the food additive according to any one of claims 1 to 4.

**6.** A fried food, comprising the food additive according to any one of claims 1 to 4.

**7.** A dispersion type beverage, comprising the food additive according to any one of claims 1 to 4.

**8.** A cereal flour processed food, comprising the food additive according to any one of claims 1 to 4.

## INTERNATIONAL SEARCH REPORT

International application No.
PCT/JP2017/018252

A. CLASSIFICATION OF SUBJECT MATTER
*A23L29/00*(2016.01)i, *A23L2/00*(2006.01)i, *A23L2/70*(2006.01)i, *A23L5/10*(2016.01)i, *A23L27/00*(2016.01)i, *C08B11/12*(2006.01)i, *A23G1/00*(2006.01)n, *A23G1/30*(2006.01)n, *A23L7/157*(2016.01)n
According to International Patent Classification (IPC) or to both national classification and IPC

B. FIELDS SEARCHED
Minimum documentation searched (classification system followed by classification symbols)
A23L29/00, A23L2/00, A23L2/70, A23L5/10, A23L27/00, C08B11/12, A23G1/00, A23G1/30, A23L7/157

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus/JMEDPlus/JST7580(JDreamIII), CAplus/FSTA/WPIDS/WPIX(STN), G-Search

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-125028 A (Kao Corp.), 11 June 2009 (11.06.2009), claims; paragraph [0041]; examples; table 1 (Family: none) | 1<br>3-8 |
| X<br>Y | JP 2013-236585 A (Daicel Corp.), 28 November 2013 (28.11.2013), paragraphs [0016], [0069] (Family: none) | 1<br>2-8 |
| Y | JP 8-134329 A (Sumitomo Chemical Co., Ltd.), 28 May 1996 (28.05.1996), examples & US 5644003 A examples | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 July 2017 (24.07.17) | 01 August 2017 (01.08.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | <br>Telephone No. |

Form PCT/ISA/210 (second sheet) (January 2015)

**INTERNATIONAL SEARCH REPORT**

International application No. PCT/JP2017/018252

C (Continuation). DOCUMENTS CONSIDERED TO BE RELEVANT

| Category* | Citation of document, with indication, where appropriate, of the relevant passages | Relevant to claim No. |
|---|---|---|
| Y | JP 7-194335 A (Dai-Ichi Kogyo Seiyaku Co., Ltd.), 01 August 1995 (01.08.1995), claims; examples (Family: none) | 1-8 |
| Y | JP 2016-27795 A (Tottori University), 25 February 2016 (25.02.2016), claims; paragraph [0035] (Family: none) | 1-8 |
| Y | JP 2015-149930 A (Nippon Paper Industries Co., Ltd.), 24 August 2015 (24.08.2015), claims; paragraph [0010] (Family: none) | 1-6,8 |
| P,X<br>P,Y | JP 2016-208946 A (Nippon Paper Industries Co., Ltd.), 15 December 2016 (15.12.2016), entire text (Family: none) | 1-2,5-8<br>3-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002204675 A
- JP 2007222041 A
- JP 2001128650 A
- JP 5203336 B
- JP 2001037425 A
- JP H07194335 A
- JP H06141815 A
- JP 5666736 B
- JP 2015149929 A
- JP 2013236585 A
- JP 2016027795 A
- JP H07188597 A
- JP H06234946 A